Europäisches Patentamt

European Patent Office

Office européen des brevets

(11) Veröffentlichungsnummer : **0 355 345 B1**

# (12) EUROPÄISCHE PATENTSCHRIFT

(45) Veröffentlichungstag der Patentschrift :
**28.10.92 Patentblatt 92/44**

(51) Int. Cl.⁵ : **B62D 33/06**

(21) Anmeldenummer : **89112239.2**

(22) Anmeldetag : **05.07.89**

(54) **Kippvorrichtung für zumindest vorn mit einer Abfederung versehene Fahrerhäuser von Nutzfahrzeugen.**

(30) Priorität : **17.08.88 DE 3827921**

(43) Veröffentlichungstag der Anmeldung :
**28.02.90 Patentblatt 90/09**

(45) Bekanntmachung des Hinweises auf die
Patenterteilung :
**28.10.92 Patentblatt 92/44**

(84) Benannte Vertragsstaaten :
**DE ES FR IT SE**

(56) Entgegenhaltungen :
**DE-A- 2 347 492
PATENT ABSTRACTS OF JAPAN, Band 9, Nr.
307 (M-435), 4. Dezember 1985; & JP-A-60 143
185 (HINO JIDOSHA KOGYO K.K.)29-07-1985**

(73) Patentinhaber : **DAIMLER-BENZ
AKTIENGESELLSCHAFT
Mercedesstrasse 136
W-7000 Stuttgart 60 (DE)**

(72) Erfinder : **Sihler, Bernd
Schulstrasse 2
W-7901 Lonsee (DE)**
Erfinder : **Seidl, Wolfgang
Asternweg 12
W-7144 Marbach (DE)**
Erfinder : **Emmann, Siegfried
Merzlweg 7
W-7056 Weinstadt 1 (DE)**

## Beschreibung

Die Erfindung bezieht sich auf eine Kippvorrichtung für zumindest vorn mit einer Abfederung versehene Fahrerhäuser von Nutzfahrzeugen der im Oberbegriff des Anspruchs 1 genannten Art.

Kippbare Fahrerhäuser, insbesondere für Lastkraftwagen, sind in vielfacher Form bekannt (DE-C-21 61 953, 23 47 492). Bei der aus der DE-C-23 47 492 bekannten Kippvorrichtung ist das der vorderen, querverlaufenden Schwenkachse ferne Ende des Schwenkarmes, ausgehend von dieser Schwenkachse, hoch bis hin zum Fahrerhaus geführt und mit diesem verbunden. Der Schwenkhebel ist etwa auf der Längenmitte des Schwenkarmes angelenkt und als doppelarmiger Hebel ausgebildet, wobei ein Ende als Verbindung des Schwenkarmes mit dem Kippzylinder vorgesehen und am Ende des Kippzylinders angelenkt ist und das andere Ende des doppelarmigen Hebels so an einer vorderen Konsole des Fahrerhauses angelenkt ist, daß zu Beginn des Kippvorganges die vom Kippzylinder ausgeübte Kraft eine Schwenkbewegung des Schwenkhebels im Gegenuhrzeigersinn relativ zum Schwenkarm zur Folge hat und dadurch das an der Konsole des Fahrerhauses angreifende Ende des Schwenkhebels das Fahrerhaus im Bereich der vorderen Abfederung und Schwenkachse nach unten zieht, so daß die Abfederung zusammengedrückt wird. Bei weiterer Betätigung des am Schwenkhebel angreifenden Kippzylinders wird über den Schwenkhebel der Schwenkarm und das Fahrerhaus nach vorn in die Kippstellung geschwenkt. Aufgrund der Betätigungskraft des Kippzylinders und der Gewichtskräfte des Fahrerhauses wirkt um die Lagerachse des Schwenkhebels ein im Gegenuhrzeigersinn gerichtetes Moment, wobei die vordere Abfederung zwischen dem Fahrerhaus und dem Schwenkarm dort wirkende Kräfte jeweils aufzunehmen hat.

Es ist ferner eine Kippvorrichtung der eingangs genannten Art bekannt (JP 60-143185 A. In: Patents Abstr. of Japan, Sect. M. Vol. 9 (1985), Nr. 307 (M-435)), bei der der Kippzylinder etwa im Bereich der Längenmitte am Schwenkhebel angreift und der Schwenkhebel in Abstand davon mit einem Ende an der Konsole des Fahrerhauses angelenkt ist, während das gegenüberliegende Ende des Schwenkhebels einen Stützteil bildet, der an einem in diesem Bereich befindlichen Anschlag der Konsole des Fahrerhauses bei der Kippbewegung anschlagen und dadurch die Konsole abstützen kann. Dieser Stützteil des Schwenkhebels und der der konsolenseitige, vom Stützteil beaufschlagte Anschlag befinden sich somit an dem Endbereich des Schwenkhebels, der dem Schwenkarm abgewandt ist und den größten Abstand davon sowie von dem heruntergeführten Teil der Konsole hat. Dies bedingt entsprechenden Platz in dem dem Schwenkarm abgewandten Konsolenbereich. Nachteilig ist ferner, daß die Lastkräfte des Fahrerhauses im nach vorn gekippten Zustand zum einen vom Kippzylinder und im übrigen, und dies überwiegend, von der vorderen Abfederung zwischen dem Fahrerhaus und dem Schwenkarm aufgenommen werden müssen. Somit gelten auch hier die eingangs geschilderten Nachteile.

Der Erfindung liegt die Aufgabe zugrunde, eine Kippvorrichtung der eingangs genannten Art zu schaffen, die bei einfachem Aufbau bei der Kippbetätigung des Fahrerhauses eine Entlastung der vorderen Abfederung von den Betätigungskräften des Kippzylinders und den Gewichtskräften des Fahrerhauses ermöglicht.

Die Aufgabe ist bei einer Kippvorrichtung der eingangs genannten Art gemäß der Erfindung durch die Merkmale im Kennzeichnungsteil des Anspruchs 1 gelöst.

Dadurch, daß der Schwenkhebel etwa im Bereich seiner Längenmitte an der Konsole des Fahrerhauses schwenkbar gehalten ist und einen von der Lagerachse zum Stützarm hin abstrebenden Stützteil aufweist, bildet der Schwenkhebel eine Schwinge, die bei Betätigung des Kippzylinders um ihre Lagerachse relativ zur Fahrerhauskonsole soweit schwenkt, bis der Stützteil am Anschlag des Schwenkarmes anschlägt und dort formschlüssig abgestützt ist und bleibt, so daß bei fortgesetzter Kippbewegung der Kippzylinder allein den Schwenkhebel beaufschlagt und darüber die Konsole und der Schwenkarm als Lagereinheit, abgestützt durch den Stützteil, um die vordere Schwenkachse in Kippstellung schwenkbar sind. Aufgrund der formschlüssigen Abstützung der Fahrerhauskonsole am Schwenkarm, die durch den Stützteil des Schwenkhebels bewirkt wird, ist die vorn befindliche Abfederung entlastet und außer Funktion, so daß diese weder die Betätigungskräfte des Kippzylinders noch die Gewichtskräfte oder sonstigen Kräfte aufzunehmen hat, die vom Fahrerhaus her wirken. Die Kippvorrichtung ist dadurch nicht nur einfach, platzsparend und kostengünstig, sondern sie hat auch den Vorteil, daß sich im Kippzustand ein genau definiertes Verhalten ergibt. Ferner ist es möglich, die vordere Abfederung nun gezielt und allein danach auszulegen, welches Federverhalten in Fahrstellung des Fahrerhauses und bei unwirksamer Kippvorrichtung gewünscht wird. In vorteilhafter Weise ist durch die Erfindung die Voraussetzung dafür geschaffen, als vordere Abfederung z. B. mindestens ein Feder-Dämpferbein einzusetzen.

Vorteilhafte Ausgestaltungen der erfindungsgemäßen Kippvorrichtung ergeben sich aus den Ansprüchen 2 - 9 .

Weitere Einzelheiten und Vorteile der Erfindung ergeben sich aus der nachfolgenden Beschreibung.

Der vollständige Wortlaut der Ansprüche ist vorstehend allein zur Vermeidung unnötiger Wiederholungen nicht wiedergegeben, sondern statt dessen lediglich durch Nennung der Anspruchsnummern darauf Bezug genommen, wodurch jedoch alle diese Anspruchsmerkmale als an dieser Stelle ausdrücklich und erfindungswesentlich offenbart zu gelten haben. Dabei sind alle in der vorstehenden und folgenden Beschreibung erwähnten Merkmale sowie auch die allein aus der Zeichnung entnehmbaren Merkmale weitere Bestandteile der Erfindung, auch wenn sie nicht besonders hervorgehoben und insbesondere nicht in den Ansprüchen erwähnt sind.

Die Erfindung ist nachfolgend anhand eines in den Zeichnungen gezeigten Ausführungsbeispieles näher erläutert. Es zeigen:

Fig. 1 eine schematische Seitenansicht einer Kippvorrichtung eines Fahrerhauses in Fahrstellung und bei unwirksamem Kippantrieb,

Fig. 2 eine schematische Seitenansicht der Kippvorrichtung und des Fahrerhauses in Fig. 1, jedoch in Kippstellung.

Kippbare Fahrerhäuser, insbesondere für Lastkraftwagen, sind in vielfacher Form bekannt (DE-PS 21 61 953, 23 47 492). Einzelheiten der vorderen Lagerung und sonstigen Details derartiger Fahrerhäuser bedürfen daher hier keiner besonderen Beschreibung. In den Zeichnungen ist nur ein Teil eines Fahrerhauses 10 gezeigt, dem eine Konsole 11 zugeordnet ist. Das Fahrerhaus ist mit einer Kippvorrichtung 12 versehen, deren Elemente auf jeder Längsseite eines Fahrzeugrahmens 13 angeordnet sein können. Einzelheiten des Fahrzeugrahmens sind nicht gezeigt, lediglich ein hochragender vorderer Lagerbock 14, der Teil des Fahrzeugrahmens 13 ist.

Die Kippvorrichtung 12 weist auf jeder Längsseite des Fahrzeugrahmens 13 einen als Schwinge wirksamen Schwenkarm 15 auf, der mit einem Ende 16 um eine vorn liegende, quer verlaufende Schwenkachse 17 am Lagerbock 14 schwenkbar gelagert ist. Mit seinem anderen Ende 18 stützt der jeweilige Schwenkarm 15 das Fahrerhaus 10 ab, wie noch später näher erläutert wird. Ferner ist ein Kippzylinder 19 vorgesehen, der nur schematisch angedeutet ist und mit dem nicht sichtbaren Ende am Fahrzeugrahmen 13 abgestützt und schwenkbar gelagert ist. Mit dem sichtbaren Ende 20 greift der Kippzylinder 19 an einem Ende 21 eines schwenkbaren Schwenkhebels 22 an, über den die Betätigungskraft des Kippzylinders 19 auf die Konsole 11 des Fahrerhauses 10 übertragbar ist.

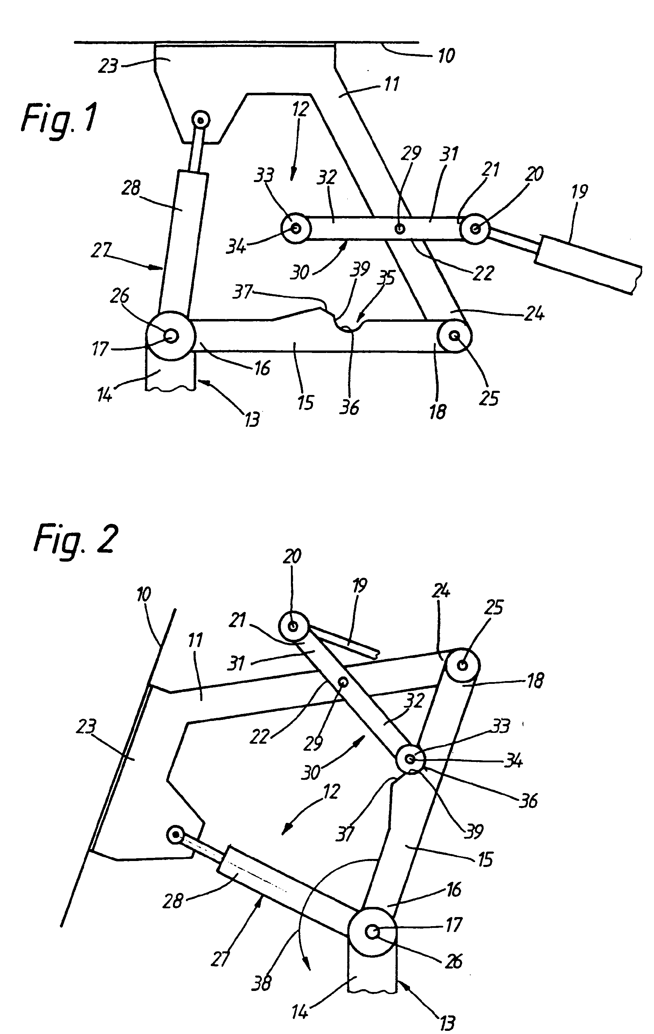

Die Konsole 11 des Fahrerhauses 10 ist vom oberen, in Fig.1 etwa horizontal verlaufenden Teil 23 schräg heruntergeführt. Sie reicht bis zum Ende 18 des Schwenkarmes 15, mit dem dieses Ende 24 der Konsole 11 gelenkig verbunden ist. Die Gelenkachse ist schematisch mit 25 eingezeichnet.

Der Schwenkarm 15 ist mit dem nicht sichtbaren, an der anderen Längsseite des Fahrzeugrahmens 13 vorgesehenen, anderen Schwenkarm mittels eines Stabilisators 26 verbunden, der insbesondere als Drehstab ausgebildet ist. Der Stabilisator 26 befindet sich im Bereich der vorderen Schwenkachse 17.

Das Fahrerhaus 10 ist in Bezug auf den Fahrzeugrahmen 13 mit einer vorderen Abfederung 27 versehen, die aus einem Feder-Dämpferbein 28 gebildet ist. Das Feder-Dämpferbein 28 erstreckt sich zwischen dem oberen, in Fig. 1 horizontalen Teil 23 der Konsole 11 des Fahrerhauses 10 und dem darunter verlaufenden Schwenkarm 15. Der in Fig. 1 schräg nach unten gerichtete Abschnitt der Konsole 11, das Feder-Dämpferbein 28 und der Schwenkarm 15 bilden gemeinsam im wesentlichen ein Dreieck, wobei die vordere Schwenkachse 17 etwa im Bereich derjenigen Ecke des Dreiecks verläuft, die vom Schnittpunkt des Schwenkarmes 15 und des Feder-Dämpferbeines 28 gebildet ist. Die andere Ecke des Dreiecks ist durch die Gelenkachse 25 repräsentiert, während die dritte Ecke des Dreiecks etwa durch den Bereich vorgegeben ist, in dem der schräg nach unten gerichtete Teil der Konsole 11 und das Feder-Dämpferbein 28 zusammenlaufen.

Der Schwenkhebel 22 ist in Abstand von seinem Ende 21, an dem das Ende 20 des Kippzylinders 19 angreift, am schräg nach unten gerichteten Teil der Konsole 11 des Fahrerhauses 10 schwenkbar gelagert. Die Lagerachse ist schematisch mit 29 bezeichnet. Der Schwenkhebel 22 weist einen abstrebenden Stützteil 30 auf, der ausgehend von der Lagerachse 29 sich in der dem einen Ende 21 abgewandten Richtung erstreckt. In besonders einfacher Gestaltung besteht der Schwenkhebel 22 aus einem doppelartigen Hebel. Der eine Arm 31 des Hebels ist mit dem Kippzylinder 19 gekoppelt, während der andere Arm 32, der sich auf der anderen Seite der Lagerachse 29 erstreckt, den Stützteil 30 bildet. Am Ende des Armes 32 ist ein Nocken 33 gehalten, der z. B. aus einer Rolle besteht, die um die Lagerachse 34 drehbar ist. Die Lagerstelle des Schwenkhebels 22 an der Konsole 11 liegt zumindest im wesentlichen im Bereich der Längenmitte des Schwenkhebels 22.

Dem Nocken 33 des Schwenkhebels 22 ist ein Anschlag 35 des zugeordneten Schwenkarmes 15 zugeordnet, der eine etwa halbkreisförmige Eintiefung 36 aufweist, in die der Nocken 33 in Form der Rolle hineinpaßt. Dieser Anschlag 35 ist Teil des Schwenkarmes 15, an dem er seitlich oder auf dessen Oberseite vorgesehen sein kann. Dem Anschlag 35 ist eine Nockenbahn 37 vorgelagert, die aus einer Schrägbahn besteht und in die halbkreisförmige Eintiefung 36 überleitet.

Zum Kippen des Fahrerhauses 10 um die vordere Schwenkachse 17 im Gegenuhrzeigersinn nach vorn wird der Kippzylinder 19 betätigt. Dadurch wird der Schwenkhebel 22 um die Lagerachse 29 aus der Position gemäß Fig. 1 im Gegenuhrzeigersinn und derart geschwenkt, daß der Stützteil 30 mit endseitigem Nocken 33 sich dem Anschlag 35 des Schwenkarmes 15 nähert. Hat der Nocken 33 die Nockenbahn 37 erreicht, so wird der Nocken 33 zunächst entlang

5         EP 0 355 345 B1         6

dieser Nockenbahn 37 geführt. Durch diese Abstützung des Nockens 33 an der Nockenbahn 37 wird die Konsole 11 um die Gelenkachse 25 zumindest geringfügig im Uhrzeigersinn geschwenkt. Dadurch federt die vordere Lagerung im Bereich des Feder-Dämpferbeines 28 zunächst aus. Bei weiterer Schwenkbetätigung des Schwenkhebels 29 in beschriebener Weise gelangt der Nocken 33 schließlich in den Bereich der halbkreisförmigen Eintiefung 36, an der der Nocken 33 dann formschlüssig anschlägt. In dieser Stellung ist die Konsole 11 am Schwenkarm 15 formschlüssig abgestützt. Die aus Konsole 11 und Schwenkarm 15 bestehende Lagerungseinheit ist somit durch den Stützteil 30 des Schwenkhebels 22 versteift. Dadurch liegt ein genau definierter Federungszustand vor, bei dem sich die Gewichtskraft des Fahrerhauses 10 nicht mehr über das Feder-Dämpferbein 28 abstützt, sondern über die Konsole 11, den Stützteil 30 und den Schwenkarm 15 übertragen wird. Wird nun der Kippvorgang durch weitere Betätigung des Kippzylinders 19 fortgesetzt, so wird die gesamte Lagereinheit um die vordere Schwenkachse 17 im Lagerbock 14 im Gegenuhrzeigersinn gemäß Pfeil 38 geschwenkt, womit die nicht weiter gezeigte hintere Fahrerhauslagerung entlastet wird und das gesamte Fahrerhausgewicht vorn aufgenommen wird. Der Kippvorgang ist stabil, solange der Schwerpunkt des Fahrerhauses 10 hinter, d.h. bei der Darstellung in Fig. 1 und 2 rechts, der Schwenkachse 17 liegt. In diesem Zustand erzeugt die Gewichtskraft des Fahrerhauses 10 ein Moment, das den Schwenkhebel 22 mit dem Nocken 33 in Form der Rolle gegen den Anschlag 35 drückt. Sobald der Schwerpunkt des Fahrerhauses 10 vor, d. h. in Fig. 1 und 2 links, der Schwenkachse 17 liegt, würde die Gewichtskraft des Fahrerhauses 10 ein gegenläufiges Moment zur Folge haben, mit einer auf den Kippzylinder 19 einwirkenden Zugbelastung, die bestrebt wäre, das beschriebene Kipphebelsystem zu "öffnen", was somit eine Einfederung im Bereich des Feder-Dämpferbeines 28 bewirken würde. Durch die Form des Anschlages 35 mit halbkreisförmiger Eintiefung 36 wird jedoch dem entgegengewirkt, weil sich der Nocken 33 in Form der Rolle auch dann noch formschlüssig an diesem Anschlag 35 abstützt. Die etwa halbkreisförmige Eintiefung 36 kann im übrigen noch mit einer überstehenden Schulter 39 auf der einen Seite erweitert sein, an der sich die Nockenbahn 37 anschließt. Diese Schulter 39 bietet noch eine zusätzliche Abstützung für den Nocken 33.

**Patentansprüche**

1. Kippvorrichtung für zumindest vorn mit einer Abfederung versehene Fahrerhäuser (10) von Nutzfahrzeugen, mit zumindest einem Schwenkarm (15), der mit seinem nach vorne weisenden, Ende (16) am Fahrzeugrahmen (13) um eine vorn liegende, querverlaufende Schwenkachse (17) schwenkbar gelagert ist und der mit seinem nach hinten weisenden Ende (18) das Fahrerhaus (10) über eine Konsole (11) abstützt, und mit einem am Fahrzeugrahmen (13) abgestützten Kippzylinder (19), der an einem Schwenkhebel (22) angreift, über den die Betätigungskraft des Kippzylinders (19) auf eine in Abstand von der Abfederung befindliche Konsole (11) des Fahrerhauses (19) übertragbar ist, welche bis zum anderen Ende (18) des Schwenkarmes (15), heruntergeführt und mit diesem (18) gelenkig verbunden ist, wobei der Schwenkhebel (22) in Abstand von der Angriffsstelle (20) des Kippzylinders (19) schwenkbar an der Konsole (11) des Fahrerhauses (10) gelagert ist und in Abstand davon einen Stützteil (30) aufweist, der bei Betätigung des Kippzylinders (19) und Schwenkung des Schwenkhebels (22) um dessen Lagerachse (29) relativ zur Konsole (11) an einem Anschlag anschlägt und bei fortgesetzter Kippbewegung die Konsole (11) formschlüssig und derart abstützt, daß mittels des den Schwenkhebel (22) beaufschlagenden Kippzylinders (19) die Konsole (11) um die vordere Schwenkachse (17) in Kippstellung schwenkbar ist, **dadurch gekennzeichnet,** daß der Schwenkhebel (22) etwa im Bereich seiner Längenmitte an der Konsole (11) des Fahrerhauses (10) um die Lagerachse (29) schwenkbar gelagert ist, daß der Kippzylinder (19) an einem Ende (21) des Schwenkhebels (22) angreift und daß der Stützteil (30) des Schwenkhebels (22) von der Lagerachse (29) zum Schwenkarm (15) hin abstrebt und bei Schwenkung des Schwenkhebels (22) um seine Lagerachse (29) an einem am Schwenkarm (15) vorgesehenen Anschlag (35) anschlägt und die Konsole (11) am Schwenkarm (15) derart abzustützen vermag, daß die Konsole (11) und der Schwenkarm (15) mittels des Kippzylinders (19) als Einheit ohne Relativbewegung in die Kippstellung schwenkbar sind.

2. Kippvorrichtung nach Anspruch 1, **dadurch gekennzeichnet,** daß die Abfederung (27) aus mindestens einem Feder-Dämpferbein (28) gebildet ist, das sich zwischen der Konsole (11) des Fahrerhauses (10) und dem Schwenkarm (15) erstreckt.

3. Kippvorrichtung nach Anspruch 1 oder 2, **dadurch gekennzeichnet,** daß die Konsole (11) des Fahrerhauses (10),das Feder-Dämpferbein (28) und der Schwenkarm (15) unter Bildung etwa eines Dreiecks zueinander angeordnet sind, wobei die vordere Schwenkachse (17) etwa im Bereich derjenigen Ecke des Dreiecks verläuft, die vom Schnittpunkt des Schwenkarmes (15)

und des Feder-Dämpferbeines (28) gebildet ist.

4. Kippvorrichtung nach einem der Ansprüche 1 - 3, **dadurch gekennzeichnet**, daß der Schwenkhebel (22) als doppelarmiger Hebel ausgebildet ist, dessen einer Arm (31) mit dem Kippzylinder (19) gekoppelt ist und dessen anderer Arm (32) den Stützteil (30) bildet.

5. Kippvorrichtung nach einem der Ansprüche 1 - 4, **dadurch gekennzeichnet**, daß der am Anschlag (35) des Schwenkarmes (15) anschlagende Stützteil (30), insbesondere Arm (32), des Schwenkhebels (22) einen Nocken (33), insbesondere eine Rolle, trägt, der mit dem Anschlag (35) in Wirkverbindung gelangen kann.

6. Kippvorrichtung nach einem der Ansprüche 1 - 5, **dadurch gekennzeichnet**, daß der Anschlag (35) eine etwa halbkreisförmige Eintiefung (36) aufweist, in die der Stützteil (30), insbesondere dessen endseitiger Nocken (33),der z.B.als Rolle ausgebildet ist,hineinpaßt.

7. Kippvorrichtung nach einem der Ansprüche 1 - 6, **dadurch gekennzeichnet**, daß der Anschlag (35) Teil des Schwenkarmes (15) ist.

8. Kippvorrichtung nach einem der Ansprüche 1 - 7, **dadurch gekennzeichnet**, daß dem Anschlag (35) eine Nockenbahn (37), z. B. Schrägbahn, vorgelagert ist, entlang der der Stützteil (30), insbesondere dessen endseitiger Nocken (33), z. B. Rolle, vor Anschlagen am Anschlag (35) unter Ausfedern der vorderen Abfederung (27) bis in die Anschlagstellung geführt wird.

9. Kippvorrichtung nach einem der Ansprüche 1 - 8, **dadurch gekennzeichnet**, daß an jeder Rahmenlängsseite ein Schwenkarm (15) vorgesehen ist und beide Schwenkarme (15) im Bereich der vorderen Schwenkachse (17) mittels eines Stabilisators (26), insbesondere eines Drehstabes, miteinander verbunden sind.

**Claims**

1. Tilting device for drivers' cabs (10) of utility vehicles provided at least forward with springing with at least one pivoting arm (15) which, with its end (16) pointing forward, is pivotably mounted on the vehicle chassis (13) around a forwardly situated transversely-extending pivoting axle (17), and which with its end (18) pointing to the rear supports the driver's cab by means of a bracket (11), and with a tilting cylinder (19) supported on the vehicle chassis (13) which tilting cylinder acts on a pivoting lever (22) through which the actuation force of the tilting cylinder (19) can be transmitted onto a bracket (11) of the driver's cab (10) situated at a distance from the springing, which bracket is passed below as far as the other end (18) of the pivoting arm (15) and swivellably connected with it (18), the pivoting lever (22) being mounted at a distance from the point of application (20) of the tilting cylinder (19) swivellably on the bracket (11) of the driver's cab (10), and at a distance therefrom has a supporting part (30) which, on the actuation of the tilting cylinder (19) and pivoting of the pivoting lever (22) around its bearing axis (29) relative to the bearing (11) strikes on a stop, and, on the continuing tilting movement, supports the bracket (11) positively and in such a manner that, by means of the tilting cylinder (19) impinging the pivoting lever (22) the bracket (11) is made swivellable around the front pivoting axis (17) in tilting position, characterized in that the pivoting lever (22), substantially in the region of the middle of its length, is mounted on the bracket (11) of the driver's cab (10) pivotably around the bearing axis (29), in that the tilting cylinder (19) applies on one end (21) of the pivoting lever (22), and in that the supporting part (30) of the pivoting lever (22) extends away from the bearing axis (29) to the pivoting arm (15) and, on the pivoting of the pivoting lever (22) about its bearing axis (29) strikes a stop (35) provided on the pivoting arm (15) and permits the bracket (11) to be supported on the pivoting arm (15) in such a manner that the bracket (11) and the pivoting arm (15) are pivotable into the tilting position by means of the tilting cylinder (19) as a unit without relative movement.

2. Tilting device according to claim 1, characterized in that the springing (27) is formed from at least one sprung shock-absorbing leg (28) which extends between the bracket (11) of the driver's cab (10) and pivoting arm (15).

3. Tilting device according to claim 1 or 2, characterized in that the bracket (11) of the driver's cab (10), the sprung shock-absorbing leg (28) and the pivoting arm (15) are disposed relative to one another in the manner of a triangle, the front pivoting axis (17) extending substantially in the region of the corner of the triangle which is formed by the point of intersection of the pivoting arm (15) and the sprung shock-absorbing leg (28).

4. Tilting device according to one of claims 1 to 3, characterized in that the pivoting lever (22) is designed as a double-arm lever, one arm (31) of which is coupled with the tilting cylinder (19) and the other arm (32) of which forms the supporting part.

5. Tilting device according to one of claims 1 to 4, characterized in that the supporting part (30) striking the stop (35) of the pivoting arm (15), in particular the arm (32) of the pivoting lever (22), carries a cam (33), particularly a roller which can come into operating connection with the stop (35).

6. Tilting device according to one of claims 1 to 5, characterized in that the stop (35) has a substantially semi-circular recess (36) into which the supporting part (30), particularly its end side cam (33), which is designed for example as a roller, fits.

7. Tilting device according to one of claims 1 to 6, characterized in that the stop (35) forms part of the pivoting arm (15).

8. Tilting device according to one of claims 1 to 7, characterized in that mounted before the stop (35) is a cam path (37), e.g., a slanting path, along which the supporting part (30), particularly its end side cam (33), e.g., roller, before striking the stop (35), under the spring action of the front springing (27), is guided as far as to striking position.

9. Tilting device according to one of claims 1 to 8, characterized in that on every longitudinal chassis side a pivoting arm (15) is provided and the two pivoting arms (15) are joined together in the region of the front pivoting axis (17) by means of a stabilizer (26), particularly a torque rod.

**Revendications**

1. Dispositif de basculement pour des cabines de conducteur (10) de véhicules utilitaires munies, au moins à l'avant, d'une suspension, comportant au moins un bras pivotant (15), qui est monté par son extrémité (16) dirigée vers l'avant sur le châssis de véhicule (13) de façon à pouvoir pivoter autour d'un axe (17) orienté transversalement et situé en avant, et qui soutient par son extrémité (18) dirigée vers l'arrière la cabine de conducteur (10) par l'intermédiaire d'une console (11), ainsi qu'un vérin de basculement (19), appuyé sur le châssis (13) du véhicule et qui agit sur un levier pivotant (22) par l'intermédiaire duquel la force d'actionnement du vérin de basculement (19) peut être transmise à une console (11) de la cabine de conducteur (19) située à distance de la suspension, console qui est dirigée vers le bas jusqu'à l'autre extrémité (18) du bras pivotant (15) et qui est reliée de façon articulée à cette extrémité (18), le levier pivotant (22) étant monté, à distance de la position d'accouplement (20) du vérin de basculement (19), de façon à pouvoir pivoter sur la console (11) de la cabine de conducteur (10) et comportant, à distance de cette console, une pièce de soutien (30) qui, lors de l'actionnement du vérin de basculement (19) et lors du pivotement du levier pivotant (22) autour de son axe d'articulation (29) par rapport à la console (11), vient s'appliquer contre une butée et, lors d'une poursuite du mouvement de basculement, soutient la console (11) par conjugaison de formes et de telle manière que, au moyen du vérin de basculement (19) sollicitant le levier de pivotement (22), la console (11) soit amenée dans la position de basculement par pivotement autour de l'axe de pivotement avant (17), caractérisé en ce que le levier pivotant (22) est monté, dans une zone située à peu près au milieu de sa longueur, sur la console (11) de la cabine de conducteur (10) de façon à pouvoir pivoter autour de l'axe d'articulation (29), en ce que le vérin de basculement (19) est articulé sur une extrémité (21) du levier pivotant (22) et en ce que la pièce de soutien (30) du levier pivotant (22) est sollicitée de l'axe d'articulation (29) vers le bras pivotant (15) et, lors d'un mouvement de pivotement du levier (22) autour de son axe d'articulation (29), elle s'applique contre une butée (35) prévue sur le bras pivotant (15) et la console (11) peut s'appuyer contre le bras pivotant (15) de telle sorte que la console (11) et le bras pivotant (15) puissent être amenés par pivotement dans la position de basculement au moyen du vérin de basculement (19), sous la forme d'un ensemble unitaire et sans mouvement relatif.

2. Dispositif de basculement selon la revendication 1, caractérisé en ce que la suspension (27) est constituée d'au moins une jambe d'amortisseur à ressort (28), qui est disposée entre la console (11) de la cabine de conducteur (10) et le bras pivotant (15).

3. Dispositif de basculement selon la revendication 1 ou 2, caractérisé en ce que la console (11) de la cabine de conducteur (10), la jambe d'amortisseur à ressort (28) et le bras pivotant (15) sont disposés mutuellement de façon à former à peu près un triangle, l'axe de pivotement avant (17) passant à proximité de la zone du sommet du triangle qui est créé par le point d'intersection du bras pivotant (15) et de la jambe d'amortisseur à ressort (28).

4. Dispositif de basculement selon une des revendications 1 à 3, caractérisé en ce que le levier pivotant (22) est agencé comme un levier à deux bras, dont un bras (31) est accouplé avec le vérin de basculement (19) et dont l'autre bras (32) constitue la pièce de soutien (30).

5. Dispositif de basculement selon une des revendications 1 à 4, caractérisé en ce que la pièce de soutien (30), notamment le bras (32), du levier pivotant (22), qui vient s'appliquer contre la butée (35) du bras pivotant (15), porte une came (33), notamment un galet, qui peut coopérer avec la butée (35).

6. Dispositif de basculement selon une des revendications 1 à 5, caractérisé en ce que la butée (35) comporte un creux (36) de forme à peu près demi-circulaire, dans lequel vient s'engager la pièce de soutien (30), notamment sa came d'extrémité (33), qui est agencée par exemple sous forme d'un galet.

7. Dispositif de basculement selon une des revendications 1 à 6, caractérisé en ce que la butée (35) fait partie du bras pivotant (15).

8. Dispositif de basculement selon une des revendications 1 à 7, caractérisé en ce qu'il est prévu en avant de la butée (35) une voie de came (37), par exemple une voie inclinée, le long de laquelle la pièce de soutien (30), notamment sa came d'extrémité (33), par exemple un galet, est guidée avant son application contre la butée (35), et avec fléchissement élastique de la suspension avant (27), jusque dans la position de butée.

9. Dispositif de basculement selon une des revendications 1 à 8, caractérisé en ce qu'il est prévu sur chaque côté longitudinal du châssis un bras pivotant (15) et les deux bras pivotants (15) sont reliés entre eux, dans la zone de l'axe de pivotement avant (17), au moyen d'un stabilisateur (26), notamment une barre de torsion.

*Fig.1*

*Fig. 2*